# EUROPÄISCHE PATENTSCHRIFT

(11) **EP 1 022 111 B1**
(45) Veröffentlichungstag und Bekanntmachung des Hinweises auf die Patenterteilung: **23.04.2003**
(21) Anmeldenummer: 00100802.8
(22) Anmeldetag: 17.01.2000
(51) Int. Cl.: B29C 45/58, B29C 45/54, B29C 45/30

(54) **Verfahren und Vorrichtung zum Spritzgiessen von Formteilen**
Method and apparatus for injection moulding of articles
Procédé et dispositif pour mouler par injection des articles

(30) Priorität: 26.01.1999 DE 19902990
(43) Veröffentlichungstag der Anmeldung: 26.07.2000
(73) Patentinhaber: Battenfeld GmbH, 58527 Meinerzhagen (DE)
(72) Erfinder: Eckardt, Helmut, Dipl.-Ing., 58540 Meinerzhagen (DE); Ehritt, Jürgen, 57271 Hilchenbach (DE); Hill, Karl-Heinz, 58515 Lüdenscheid (DE)

(56) Entgegenhaltungen:
- EP-A- 0 672 512
- DE-A- 19 653 099
- DE-A- 19 715 229
- GB-A- 996 102
- PATENT ABSTRACTS OF JAPAN vol. 14, no. 447 (M-1029), 25. September 1990 (1990-09-25) & JP 02 178012 A (NISSEI PLASTICS IND CO), 11. Juli 1990 (1990-07-11)

## Beschreibung

Die Erfindung betrifft ein Verfahren zum Spritzgießen von Formteilen, die aus einer Mischung aus mindestens einem Kunststoffmaterial und mindestens einem Zusatz in Form von faser- oder pulverförmigen Fülloder Verstärkungsstoffen, insbesondere Glasfasern, Kohlenstoff-Fasern, Holzfasern, Kreide, mineralischen Füllstoffen und/oder Talkum, bestehen. Des weiteren betrifft die Erfindung eine Vorrichtung zum Spritzgießen von Formteilen.

Bei der Verarbeitung von gefüllten bzw. verstärkten Kunststoffen sowie bei Kunststoffmischungen gibt es häufig Probleme bei der Vermischung der einzelnen Bestandteile der spritzzugießenden Mischung. Insbesondere bei langfasrigen Verstärkungsmaterialien (z. B. Glasfasern, Kohlenstoff-Fasern, gewachsenen Fasern wie Holz) kommt es nicht nur auf eine schonende Aufbereitung des Materials mit dem Ziel einer möglichst geringen Zerstörung der Fasern an, sondern auch auf eine möglichst gleichmäßige Verteilung. Probleme gibt es insbesondere dann, wenn Füllstoffe wie beispielsweise Talkum, Kreide, mineralische Füllstoffe oder Glasfasern einer Kunststoffgrundmasse zuzumischen und die Mischung zu homogenisieren ist.

Zwar sind Mischkammern beispielsweise aus der **DE 74 14 436 U1** bekannt. Dort werden Mehrkomponenten-Kunststoffe, insbesondere Polyurethan, verarbeitet, indem einer Mischkammer die zu vermischenden einzelnen Komponenten zugeführt werden. Dabei werden die einzelnen Komponenten über Zuführungsleitungen in die Mischkammer gefördert. Gleichzeitig wird ein Rührwerk, das sich in der Mischkammer befindet, in Gang gesetzt. Damit beginnt auch der Austritt des durchmischten Kunststoffes aus der Austrittsöffnung der Mischkammer in die Werkzeugkavität.

Erste Probleme ergeben sich dann, wenn das der Mischung zugrundeliegende Kunststoffgrundmaterial in einer klassischen Spritzgießmaschine aufzubereiten ist, die meist mit einer Schubschnecken-Plastifizier- und -Spritzeinheit ausgestattet ist. Dann treten nämlich dadurch Schwierigkeiten auf, daß der diskontinuierliche Plastifiziervorgang auf den Mischvorgang im Mischelement trifft, der am besten bei kontinuierlichem Betrieb erfolgt.

Kaum Vorbilder für eine Lösung finden sich im Stand der Technik dafür, wenn - gemäß der eingangs genannten Gattung - Kunststoffe mit faser- oder pulverförmigen Füll- oder Verstärkungsstoffen gemischt und homogenisiert werden sollen.

Bekannt sind hierfür nur Lösungen, bei denen durch die Plastifizier- und Einspritzschnecke sowohl die Aufschmelzung als auch die Homogenisierung erfolgt; in den Mischbereich der Schnecke werden dabei neben dem Kunststoffgrundmaterial auch die Füllstoffe zugegeben. Solche Lösungen führen aber nicht zu einem besonders guten Resultat: Aufschmelzen, Zudosieren, gleichmäßiges Vermischen und Einspritzen sind Teilvorgänge, die ungleiche Prozeßbedingungen erfordern, die in einer solchen Einheit nur unter dem Eingehen von Kompromissen möglich wird. Insbesondere bei langfasrigen Zusatz- oder Füllstoffen kommt es dabei immer wieder zu einer Zerstörung der Fasern, was die Qualität des fertigen Formteils herabsetzt.

Daher sind auch Lösungen zum Einsatz gekommen, bei denen versucht wurde, Füllstoffe einer Kunststoffgrundmasse über besonders ausgelegte Schnecken zuzudosieren. Hier sind insbesondere Doppelschneckenextruder zu nennen, die jedoch einen kontinuierlichen Betrieb erforderlich machen, während der Spritzgießprozeß diskontinuierlich ablaufen muß. Dadurch ergibt sich in nachteilhafter Weise die Notwendigkeit einer recht aufwendigen Abstimmung, damit der kontinuierlich arbeitende Doppelschneckenextruder mit vorgegebener Leistung an den intermittierend arbeitenden Spritzgießprozeß angepaßt werden kann.

Der Erfindung liegt daher die **Aufgabe** zugrunde, ein Verfahren und eine zugehörige Vorrichtung zu schaffen, mit dem bzw. mit der es möglich werden soll, Kunststoffen, die in klassischen Schubschnecken-Plastifizier- und -Spritzeinheiten aufgeschmolzen worden sind, beliebige Mengen von Zusatzstoffen in Form von faser- oder pulverförmigen Fülloder Verstärkungsstoffen, insbesondere Glasfasern, Kohlenstoff-Fasern, Holzfasern, Kreide, mineralischen Füllstoffen und/oder Talkum, beizumischen und die so erhaltene Mischung möglichst gut zu homogenisieren. D. h. es sollen unterschiedliche Komponenten direkt in der Spritzgießmaschine compoundiert und die Bestandteile innig miteinander vermischt werden. Wesentliches Augenmerk soll dabei darauf liegen, daß auch eine homogene Durchmischung erreicht werden kann, wenn langfasrige Zusatzstoffe beigemischt werden sollen, ohne daß es zu einer Zerstörung der Fasern kommt.

Die **Lösung** dieser Aufgabe durch die Erfindung wird verfahrensgemäß durch folgende Abfolge von Verfahrensschritten gekennzeichnet:
a) Plastifizieren einer Mischung des Kunststoffmaterial mit den sich darin befindlichen Füll- oder Verstärkungsstoffen in einer Schubschnecken-Plastifizier- und -Spritzeinheit (1) durch Rotieren einer Plastifizier- und Einspritzschnecke (2), die in einem Schnekkenzylinder (3) rotatorisch und axial beweglich angeordnet ist;
b) Austreiben der plastifizierten Mischung aus Kunststoffmaterial und Füll- oder Verstärkungsstoffen durch axiales Verschieben der Plastifizier- und -Einspritzschnecke (2) aus der Schubschnecken-Plastifizier- und -Spritzeinheit (1) in ein Mischelement (4);
c) Homogenisieren der Mischung aus Kunststoffmaterial und Fülloder Verstärkungsstoffen in dem Mischelement (4) durch einen Mischer (5), der im Mischelement (4) beweglich und von einem mechanischen Antrieb (6) antreibbar angeordnet ist;
d) Austreiben der homogenisierten Mischung aus Kunststoffmaterial und Füll- oder Verstärkungsstoffen vom Mischelement (4) in ein Spritzgießwerkzeug (7).

Grundgedanke der Erfindung ist es demnach, einer bekannten Schubschnecken-Plastifizier- und -Spritzeinheit einen "dynamischen Mischer" nachzuschalten, dessen Zweck es ist, eine gute Homogenisierung im Falle dessen zu erzielen, daß insbesondere langfasrige Zusatzstoffe einer Kunststoffgrundkomponente beizumischen sind. Durch die vorgeschlagene Verfahrenskombination ergibt sich der Vorteil, daß durch den nachgeschalteten Mischer weder in der Schneckeneinheit noch im Mischer selber eine solche mechanische Beanspruchung der beizumischenden Fasern erfolgen muß, daß diese geschädigt, namentlich gebrochen, werden. Durch die vorgeschlagene Verfahrensabfolge werden langfasrige Anteile, die dem Kunststoff beizumischen sind, ohne übermäßig große mechanische Beanspruchung schonend gefördert und - im Mischer - homogen in die Grundmasse eingemischt.

Der Schneckeneinheit kommt damit primär die Aufgabe der Plastifizierung und des Zumischens von Zusatzstoffen bei, während die Homogenisierung selber primär im nachgeschalteten "dynamischen Mischer" erfolgt.

Gemäß einer ersten Fortbildung ist vorgesehen, daß die Füll- oder Verstärkungsstoffe dem bereits zumindest teilaufgeschmolzenen Kunststoffmaterial in den Schneckenzylinder zugeführt werden. Dabei werden die Füll- oder Verstärkungsstoffe dem Schneckenzylinder an einer Stelle zugegeben, an dem bereits schmelzflüssige Kunststoffschmelze vorliegt, wo aber trotzdem noch die Schneckengänge der Plastifizier- und Einspritzschnecke wirksam sind.

Besonders vorteilhaft ist es, wenn vorgesehen wird, daß obiger Schritt d) aus den Teilschritten besteht:
d1) Austreiben der homogenisierten Mischung aus Kunststoffmaterial und Füll- oder Verstärkungsstoffen vom Mischelement (4) in einen Schmelzespeicher (8);
d2) Kumulieren einer für die Herstellung eines Formteils ausreichenden Menge Mischung in dem Schmelzespeicher (8);
d3) Austreiben der angesammelten Mischung aus dem Schmelzespeicher (8) in das Spritzgießwerkzeug (7).

Im Schmelzespeicher wird dann also Gemisch aus Kunststoff und Zusatzstoff angesammelt und erst dann, wenn genügend Material für einen Schuß vorliegt, dieses in das Werkzeug eingespritzt.

Weiterhin kann vorgesehen werden, daß der vom Mischelement (4) oder Schmelzespeicher (8) ausgetriebenen Mischung aus Kunststoffmaterial und Füll- oder Verstärkungsstoffen vor der Einspritzung ins Spritzgießwerkzeug eine weitere Kunststoffkomponente zugemischt wird. Dies ist besonders dann interessant, wenn ein Formteil aus mehreren Kunststoffkomponenten gespritzt werden soll.

Ferner ist es vorteilhaft, wenn das Mischelement von mindestens zwei parallel angeordneten Schubschnecken-Plastifizier- und -Spritzeinheiten (1, 9) befüllt wird, wobei mindestens eine Schubschnecken-Plastifizierund Spritzeinheit (1, 9) eine Mischung aus Kunststoffmaterial und Fülloder Verstärkungsstoffen aufbereitet.

Zur guten Vermischung im "dynamischen Mischer" kann vorgesehen werden, daß der Mischer (5) eine Rotationsbewegung ausführt, die nach einem in der Steuerung der Spritzgießmaschine hinterlegten Drehzahlprofil mit über der Zeit ungleichförmigem Verlauf erfolgt. Insbesondere kann vorgesehen werden, daß während der Plastifizierung der Mischung keine Rotation des Mischers (5) erfolgt.

Die Vorrichtung zum Spritzgießen von Formteilen, die aus einer Mischung aus mindestens einem Kunststoffmaterial und mindestens einem Zusatz in Form von faser- oder pulverförmigen Füll- oder Verstärkungsstoffen, insbesondere Glasfasern, Kohlenstoff-Fasern, Holzfasern, Kreide, mineralischen Füllstoffen und/oder Talkum, bestehen, weist auf:
- mindestens eine Schubschnecken-Plastifizier- und -Spritzeinheit (1) zum Plastifizieren einer Mischung des Kunststoffmaterial mit den sich darin befindlichen Füll- oder Verstärkungsstoffen mit einer Plastifizier- und Einspritzschnecke (2), die in einem Schneckenzylinder (3) rotatorisch und axial beweglich angeordnet ist und
- ein Spritzgießwerkzeug (7), in das die plastifizierte Mischung aus Kunststoffmaterial und Füll- oder Verstärkungsstoffen eingespritzt wird.

Erfindungsgemäß ist die Vorrichtung dadurch gekennzeichnet, daß zwischen der Schubschnecken-Plastifizier- und -Spritzeinheit (1) und dem Spritzgießwerkzeug (7) ein Mischelement (4) angeordnet ist, das einen Mischer (5), der von einem mechanischen Antrieb (6) angetrieben wird, zur Homogenisierung der Mischung des Kunststoffmaterials mit den sich darin befindlichen Füll- oder Verstärkungsstoffen aufweist.

Fortbildungsgemäß ist vorgesehen, daß zur Zuführung von Füll- oder Verstärkungsstoffen in das bereits zumindest teilaufgeschmolzene Kunststoffmaterial eine Zuführeinrichtung für Zusatzstoff (10) vorgesehen ist, die die Füll- oder Verstärkungsstoffe in den Bereich des Schnekkenzylinders (3) zuführt.

Weiterhin ist es vorteilhaft, wenn zwischen dem Mischelement (4) und dem Spritzgießwerkzeug (7) ein Schmelzespeicher (8) angeordnet ist. Dann ist es sinnvoll, daß der Schmelzespeicher (8) Mittel zum Einspritzen von kumuliertem Kunststoffmaterial in das Spritzgießwerkzeug (7) aufweist.

Für die Verarbeitung mindestens zweier Kunststoffe ist es vorteilhaft, wenn mindestens eine weitere Schubschnecken-Plastifizier- und -Spritzeinheit (9) zur Zumischung einer weiteren Kunststoffkomponente zu der Mischung aus Kunststoffmaterial und Füll- oder Verstärkungsstoffen vor der Einspritzung ins Spritzgießwerkzeug vorgesehen ist.

Dabei kann es vorteilhaft sein, wenn mindestens zwei parallel angeordnete Schubschnecken-Plastifizier- und -Spritzeinheiten (1, 9) vorgesehen sind (mit parallel ist die Funktionsweise und nicht die geometrische Anordnung gemeint).

Hinsichtlich der Schneckenausbildung sind mehrere Anordnungen als vorteilhaft erkannt worden: Zunächst kann vorgesehen werden, daß die Plastifizier- und -Einspritzschnecke (2) als 3- oder Mehrzonenschnecke ausgebildet ist. Weiterhin ist es sinnvoll, daß die Plastifizier- und -Einspritzschnecke (2) als Mischteil-, Barriere- oder Barrieremischteilschnecke ausgebildet ist. Schließlich ist es mit Vorteilen verbunden, wenn die Plastifizier- und -Einspritzschnecke (2) als Entgasungsschnecke ausgebildet ist.

Eine günstige Aufbereitung von Kunststoffmischung wird insbesondere dann erreicht, wenn vorgesehen ist, daß die Zuführeinrichtung (10) als Förderschnecke oder Dosiervorrichtung ausgebildet ist. Die Zuführeinrichtung (10) kann mit ihrem Ausstoßbereich im Entgasungsbereich der Plastifizier- und -Einspritzschnecke (2) angeordnet sein.

Schließlich kann vorgesehen werden, daß zwischen Mischelement (4) und Schmelzespeicher (8) ein Rückschlagventil, insbesondere ein Kugelrückschlagventil, oder ein Verschluß, insbesondere ein Querbolzenverschluß, angeordnet ist.

In der Zeichnung sind Ausführungsbeispiele der Erfindung dargestellt.
- Fig. 1: zeigt schematisch eine Spritzgießvorrichtung mit einer Schubschnecken-Plastifizier- und -Spritzeinheit mit einem nachgeschalteten Mischelement, in
- Fig. 2: ist eine Spritzgießvorrichtung zu sehen, die in Ergänzung zu Fig. 1 einen Schmelzespeicher aufweist, in
- Fig. 3: ist eine Ausführungsvariante zu sehen, bei der die Mischelemente im Werkzeug angeordnet sind,
- Fig. 4: stellt eine weitere Variante mit zwei SchubschneckenPlastifizier- und -Spritzeinheiten dar,
- Fig. 5: zeigt eine weitere Ausgestaltung mit einem weiteren Spritzaggregat,

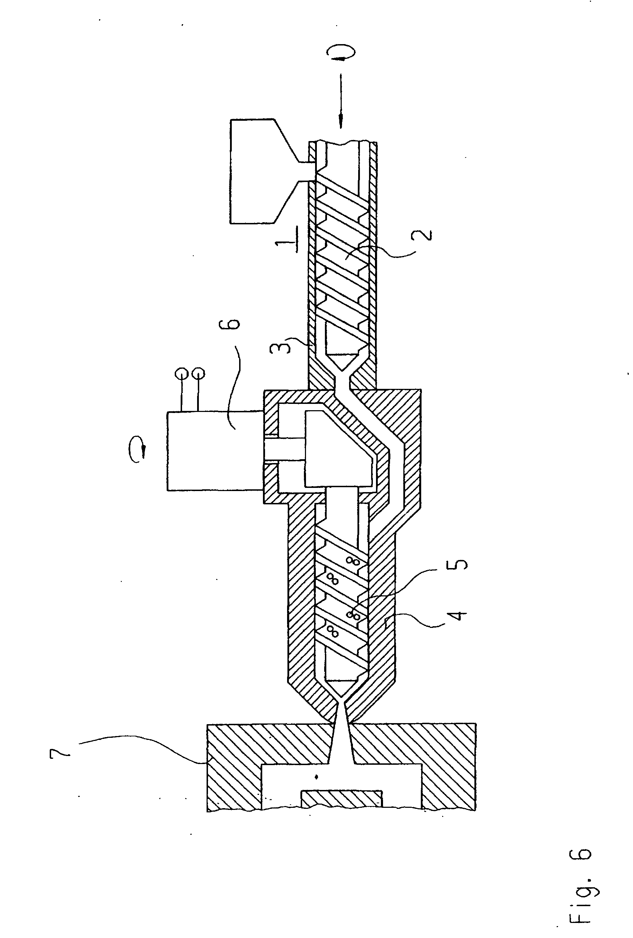

- Fig. 6: zeigt eine weitere Ausführungsvariante für die Anordnung von Plastifizier- und -Spritzeinheiten und Mischelement,

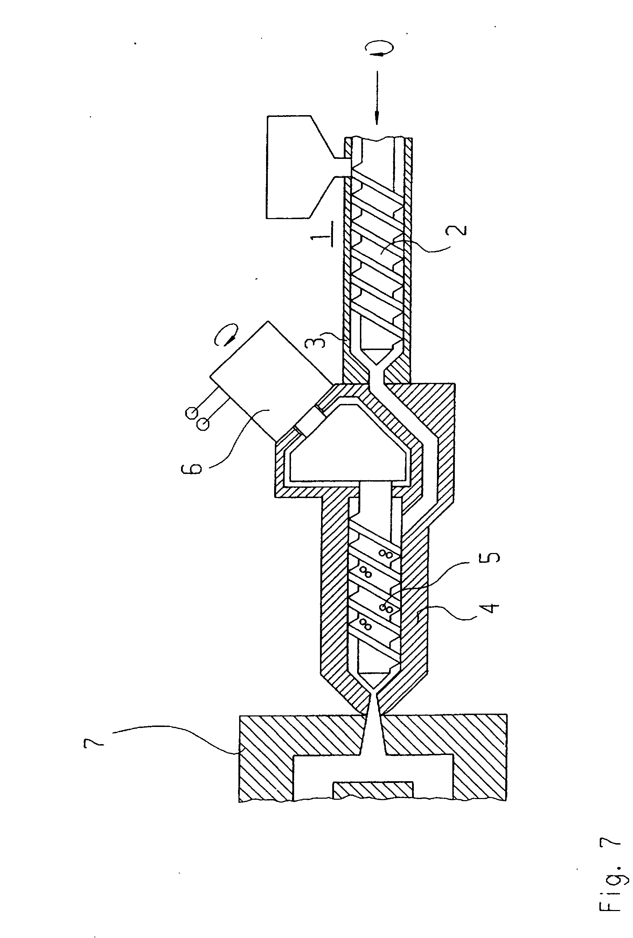

- Fig. 7: zeigt eine Variante der Figur 5.

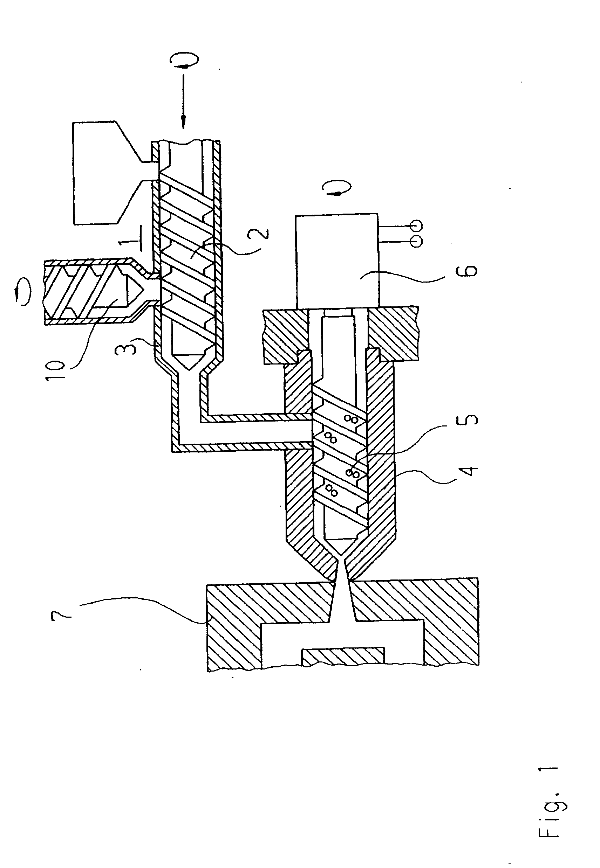

In Fig. 1 ist eine Spritzgießvorrichtung zu sehen, deren wesentliche Komponente eine Schubschnecken-Plastifizier- und -Spritzeinheit 1 ist. Diese arbeitet intermittierend, d. h. nach der Aufschmelzung von Kunststoffmaterial - durch eine Rotationsbewegung der Plastifizier- und - Einspritzschnecke 2 - wird dieses - durch eine Axialbewegung der Schnecke 2 - in ein Spritzgießwerkzeug 7 injiziert. Dabei kann vorgesehen werden, daß dem Kunststoffgranulat, das in bekannter Weise über einen Einfülltrichter dem Schneckenzylinder 3 zugeführt wird, bereits ein Zusatz in Form eines faser- oder pulverförmigen Füll- oder Verstärkungsstoffes (z. B. Glasfasern, Kohlenstoff-Fasern, Holzfasern, Kreide, mineralischen Füllstoffen, Talkum) beigefügt ist, der dann mit aufgeschmolzen und eingeknetet wird.

Es kann aber auch vorgesehen sein - und dieser Fall ist in Fig. 1 dargestellt -, daß die Zusatzstoffe mittels einer Zuführeinrichtung 10 dem bereits teilweise aufgeschmolzenen Kunststoff zugeführt wird. Vorteilhafterweise erfolgt diese Zuführ noch im Bereich der Schneckengänge der Schnecke 2, so daß der Zusatzstoff bereits von der Schnecke 2 in das Kunststoffgrundmaterial eingeknetet wird.

Für anspruchsvolle Spritzgießformteile reicht die so zu erzielende Homogenisierung jedoch nicht aus. Daher ist erfindungsgemäß vorgesehen, daß der Schubschnecken-Plastifizier- und -Spritzeinheit 1 ein Mischelement 4 nachgeschaltet ist. Das Mischelement 4 weist im Ausführungsbeispiel einen Mischer 5 auf, der von einem mechanischen Antrieb 6 z. B. einem Hydro- oder Servomotor angetrieben wird; es handelt sich insofern um einen "dynamischen Mischer", da er aktive Mischelemente hat.

Die Schubschnecken-Plastifizier- und -Spritzeinheit 1 dosiert also in bekannter Weise die Schmelze, wobei der Mischer 5 während der Dosierung vorzugsweise still steht. Zum Einspritzen wird die plastifizierte Schmelze durch das Mischelement 4, in der der Mischer jetzt mit einer gewünschten und vorgegebenen Drehzahl rotiert, in das Spritzgießwerkzeug 7 eingespritzt.

In vorteilhafter Weise ergibt sich damit, daß nur über einen kurzen Zeitraum - nämlich die Füllzeit - eine Mischbelastung auf den Rohstoff wirkt und die Verweilzeit im Mischelement 4 nur sehr kurz ist.

Die zum Einsatz kommende Schubschnecke kann als 3- oder Mehrzonenschnecke, als Entgasungsschnecke oder als Mischteil-, Barriere- oder Barrieremischteilschnecke ausgeführt sein. Die Zuführeinrichtung 10 für Zusatzstoffe kann eine Förderschnecke aufweisen und/oder mit einer Dosiervorrichtung ausgestattet sein, um eine genaue Zudosierung zu erreichen. Für den Auslaß der Zuführeinrichtung eignet sich besonders gut der Entgasungsbereich der Schnecke.

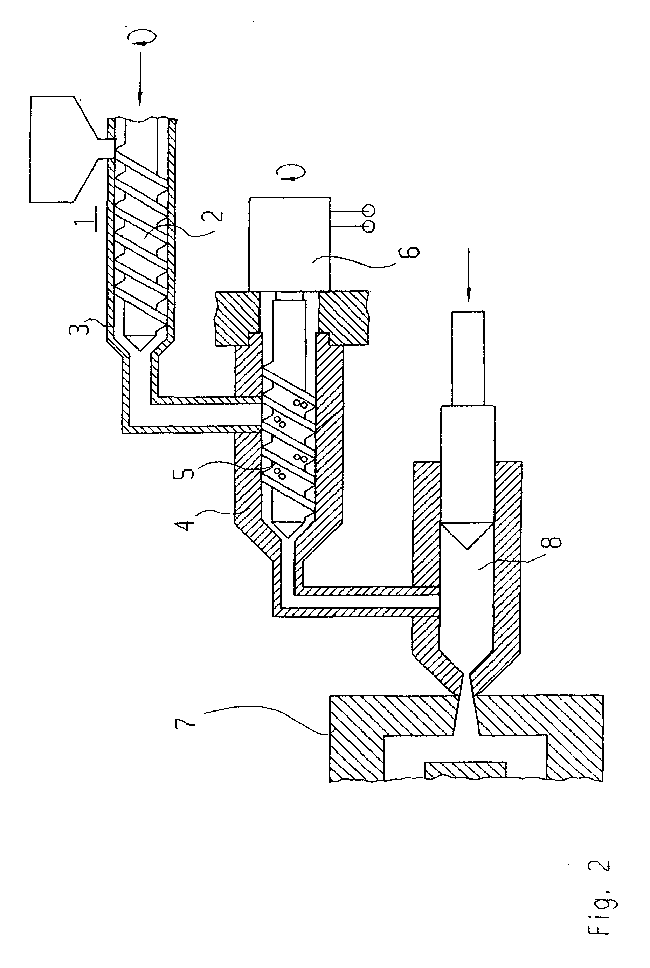

In Fig. 2 ist eine etwas andere Ausführungsform der Spritzgießvorrichtung zu sehen. Während in Fig. 1 die vom Mischelement 4 homogenisierte Mischung direkt ins Werkzeug 7 gespritzt wurde, ist in Fig. 2 zu sehen, daß die Förderung vom Mischelement 4 zunächst in einen Schmelzespeicher oder Transferzylinder 8 erfolgt. Vom Schmelzespeicher 8 aus wird die Schmelze dann ins Werkzeug injiziert.

Die Schubschnecken-Plastifizier- und -Spritzeinheit 1 dosiert zunächst das gewünschte Volumen an Schmelze und Zuschlagsstoffen auf und spritzt die Mischung beim Passieren des Mischelements 4 in den Schmelzespeicher 8 ein. Dieser Vorgang erfolgt außerhalb des eigentlichen Einspritz- und Nachdruckvorgangs ins Werkzeug. Die Verbindung zwischen Mischelement 4 und Schmelzespeicher 8 wird vorteilhafterweise mit einem - nicht dargestellten - Rückschlagventil oder Verschluß versehen, das bzw. der ein Zurückströmen von Mischung aus dem Speicher 8 in das Mischelement 4 beim Einspritzen verhindert. Ausführungsformen für das Rückschlagventil bzw. den Verschluß können z. B. Kugelrückschlagventile oder Querbolzenverschlüsse sein, d. h. Vorrichtungen, die ein gezieltes Öffnen und Schließen des Schmelzekanals erlauben. Derartige Ausgestaltungen sind besonders vorteilhaft bei der Verarbeitung von langfaserverstärkten Kunststoffen.

Der Vorteil der in Fig. 2 dargestellten Ausführungsform ist, daß der eigentliche Füllvorgang getrennt von dem Homogenisierungsvorgang im Mischelement 4 erfolgen kann. Daraus folgt, daß die Einspritzgeschwindigkeit bzw. Füllzeit gezielt auf das jeweilige Formteil abgestimmt werden kann und unabhängig von dem Füllvorgang des Schmelzespeichers 8 ist.

Die Ausführungsformen gemäß Fig. 1 und Fig. 2 eignen sich besonders gut für die Verarbeitung von extrem langfasrigen Zusatzstoffen. Dabei ist auch eine Kombination des Füllvorgangs mit unterschiedlichen Spritzgießverfahren möglich. So kann die Schmelze direkt in das geschlossene Werkzeug eingespritzt werden. Alternativ kann auch vorgesehen sein, daß die Schmelze in das geschlossene oder teilweise geschlossene Werkzeug so eingespritzt wird, daß abhängig vom Füllungsgrad das Werkzeug wieder geöffnet wird, um in einem nachfolgenden Prägevorgang wieder geschlossen zu werden. Damit wird eine druckarme Verteilung der Schmelze erreicht. Ferner sind alternative Spritzgießabfolgen denkbar, bei denen das Werkzeug zunächst bei einem auf ein Anfangsvolumen eingestellten Spalt eingespritzt wird und dann geschlossen wird.

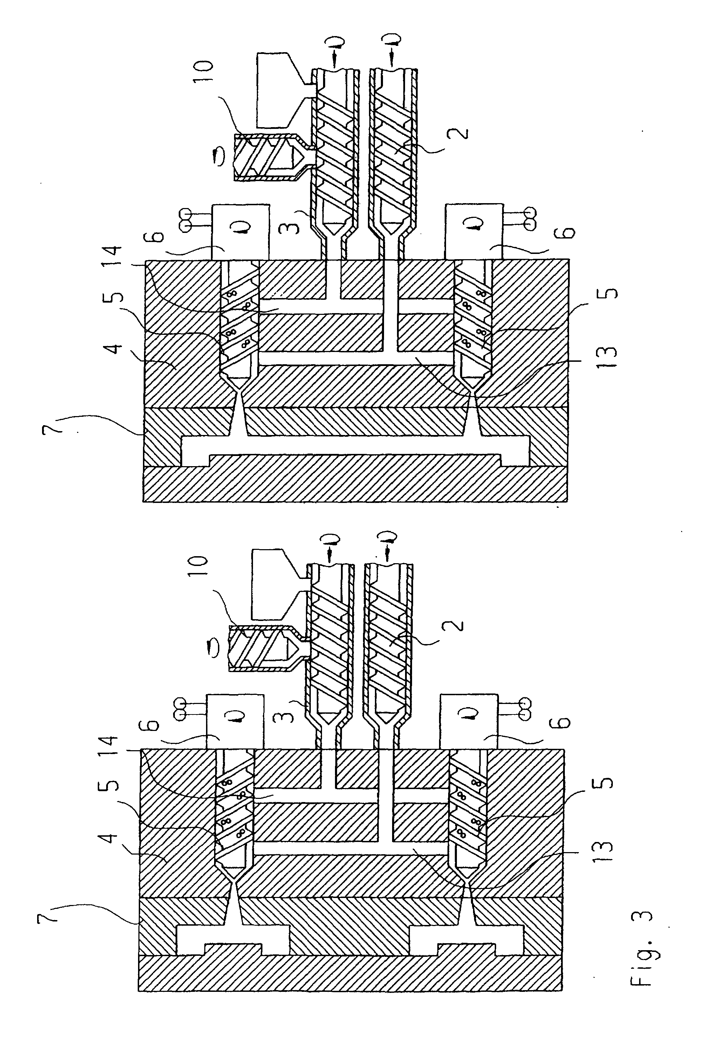

Natürlich sind auch Varianten der gezeigten Ausführungsformen derart denkbar und sinnvoll, daß das Mischelement 4 bei mehreren Anspritzpunkten jeweils direkt am Anspritzpunkt im oder am Werkzeug angeordnet wird. Das bedeutet, daß bei der Verwendung von Mehrfachanspritzungen, z. B. durch Heißkanalsysteme, ein "dynamischer Mischer" an jedem Anspritzpunkt angeordnet wird, der während der Einspritzung aktiviert wird und die intensive Vermischung veranlaßt. In Fig. 3 ist eine entsprechenden Ausführungsvariante gezeigt. Die Verbindungskanäle 13, 14 sind hier versetzt dargestellt.

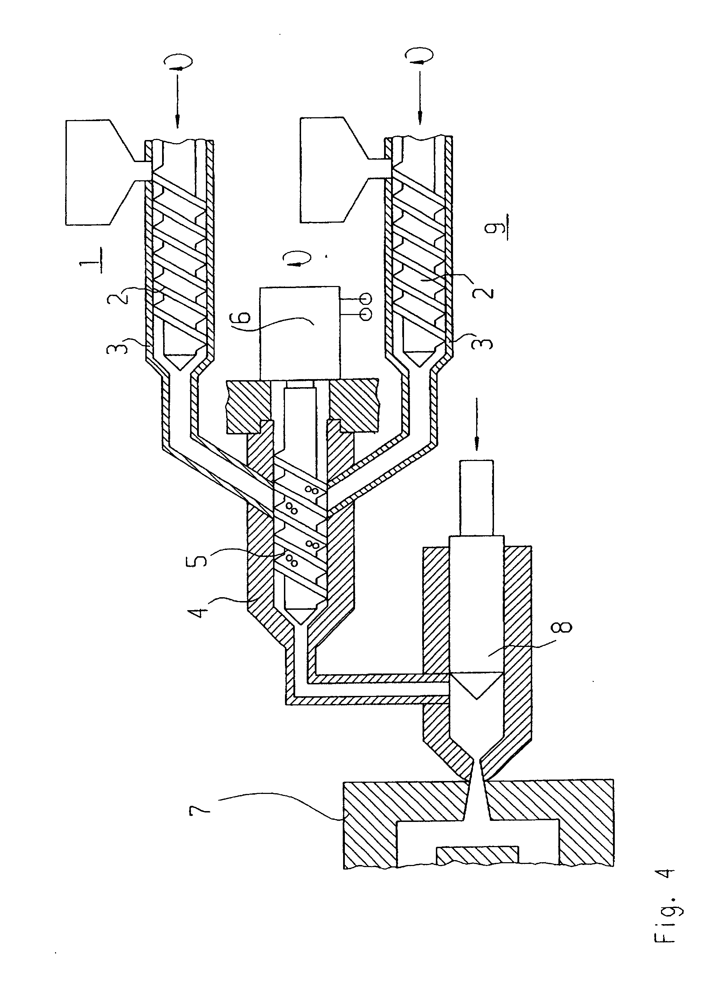

Fig. 4 zeigt eine weitere Variante der erfindungsgemäßen Spritzgießvorrichtung. Im dargestellten Falle werden zwei Kunststoffkomponenten verarbeitet, von der mindestens eine einen Zusatz in Form von faseroder pulverförmigen Füll- oder Verstärkungsstoffen aufweist. Die Verarbeitung, d. h. Aufschmelzung, der beiden Kunststoffe erfolgt in jeweiligen Schubschnecken-Plastifizier- und -Spritzeinheiten 1 und 9. Mit diesen beiden Spritzeinheiten können aber nicht nur völlig unterschiedliche Rohstoffe (Kunststoffe), sondern auch ein Rohstoff und ein anderer Stoff, z. B. ein Füllstoff, gefördert und dosiert werden. Weiterhin ist die Anordnung weiterer Förder- und Zudosiereinheiten (s. Fig. 1) an eine oder an beide der Schneckenzylinder möglich. Möglich ist es auch, mehr als zwei Spritzaggregate anzuordnen, die über eine gemeinsame Verbindung mit dem nachgeschalteten Mischelement 4 in Verbindung stehen. Wie zu erkennen ist, ist hier die Version mit dem nachgeschalteten Schmelzespeicher 8 dargestellt, für den die obigen, unter Fig. 2 gemachten Ausführungen analog gelten.

Da die Spritzeinheiten 1 und 9 als Schubschneckenaggregate ausgeführt sind, erfolgt zunächst die Dosierung der einzelnen Komponenten unabhängig, gleichzeitig oder zeitversetzt zueinander. Beim Einspritzvorgang werden die einzelnen Spritzaggregate in der Weise angetrieben, daß das gewünschte Mengenverhältnis das Mischelement 4 passiert, wo die Komponenten samt Füll- oder Verstärkungsstoff miteinander vermengt und die Mischung so homogenisiert wird. Durch den nur einen relativ kurzen Zeitraum dauernden Einspritzvorgang in den Schmelzespeicher wird der Speicher 8 gefüllt. Die Einspritzung erfolgt wie zuvor im Zusammenhang mit Fig. 2 beschrieben mittels des Schmelzespeichers 8, der auch den Nachdruck aufbringt.

Ein Vorteil der in Fig. 4 gezeigten Ausgestaltung liegt darin, daß sie sich in besonderer Weise für Compoundierzwecke eignet. So können nicht nur Kunststoffe unterschiedlicher Konsistenz (z. B. Polypropylen (PP) und Polystyrol (PS), die sich ansonsten nicht miteinander verbinden lassen) miteinander vermischt werden, sondern es ist zusätzlich auch möglich, den einen oder den anderen Kunststoff mit den in Rede stehenden Zusatzstoffen zu versehen. Da es sich um konventionelle Schubschnekkeneinheiten 1 und 9 handelt, ist ein diskontinuierlicher Betrieb möglich, ohne daß negative Auswirkungen auf die Qualität zu befürchten sind. Besonders vorteilhaft bietet sich auch diese Vorrichtung für die Verarbeitung langfasriger Anteile im Kunststoff an, da auch hier eine schonende Aufbereitung der Mischung gewährleistet ist.

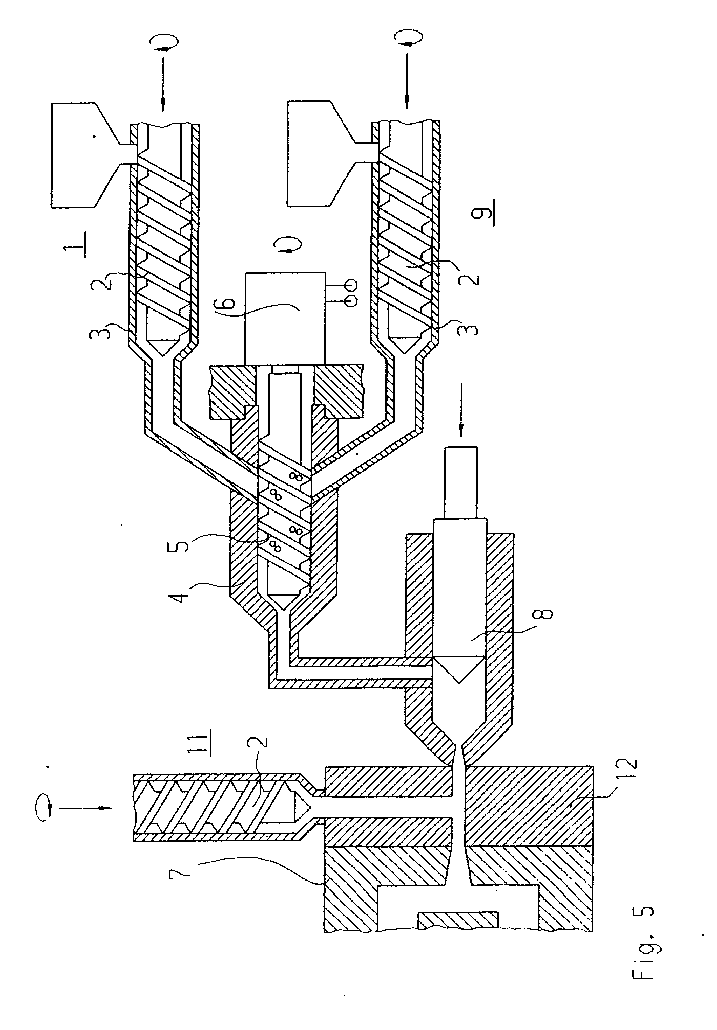

In Fig. 5 ist die Kombination der gemäß Fig. 4 ausgebildeten Vorrichtung mit einem weiteren Spritzaggregat 11 dargestellt, wobei dieses weitere Spritzaggregat senkrecht gezeichnet ist. Mittels der dargestellten Vorrichtung und der Zwischenplatte 12, die am Werkzeug 7 angeordnet ist, oder auch über eine - nicht dargestellte - 2-Kanal-Düse, die direkt mit dem Schmelzespeicher 8 und der Spritzeinheit 11 in Verbindung steht, erfolgt die Einspritzung zur Herstellung von dreischichtigen Formteilen, wobei das Hautmaterial entweder von der Spritzeinheit 11 und das Kernmaterial von den Spritzeinheiten 1 und 9 geliefert wird oder umgekehrt. Auf diese Weise lassen sich Formteile mit besonders guten Eigenschaften erzeugen, die hohe Steifigkeiten und Festigkeiten in Verbindung mit abgestimmten Oberflächenqualitäten aufweisen.

Die in Fig. 4 und Fig. 5 gezeigten Vorrichtungen eignen sich auch in besonderer Weise zur Aufbereitung von Recycling-Werkstoffen, insbesondere auch für Kunststoffmischungen mit Füll- oder Verstärkungsstoffen.

### Beispiel:

### Fall 1:

Es wurde Polypropylen mit 40 % Glasfaseranteil mit Glasfaserlängen von ca. 12 mm zunächst durch den "dynamischen Mischer" ohne Mischbewegung (Rotation des Mischers 5) in das Werkzeug 7 eingespritzt. Es wurden plattenförmige Formteile gespritzt, die eine recht gute Verteilung der Glasfasern zeigten, jedoch zu starkem Verzug neigten.

### Fall 2:

Dann wurde das gleiche Material bei sonst gleichen Spritzbedingungen, jetzt jedoch mit drehendem Mischer 5, in das Werkzeug eingespritzt. Die Formteile zeigten eine sehr gleichmäßige Oberflächenstruktur und die Fasern waren gleichmäßiger verteilt. Die gleichmäßigere Verteilung hat zur Folge, daß die Platten - verglichen mit Fall 1 - keinen Verzug aufwiesen.

### Bezugszeichenliste:

- 1: Schubschnecken-Plastifizier- und -Spritzeinheit
- 2: Plastifizier- und Einspritzschnecke
- 3: Schneckenzylinder
- 4: Mischelement
- 5: Mischer
- 6: mechanischer Antrieb
- 7: Spritzgießwerkzeug
- 8: Schmelzespeicher (Transferzylinder)
- 9: zweite Schubschnecken-Plastifizier- und -Spritzeinheit
- 10: Zuführeinrichtung für Zusatzstoff
- 11: weitere Schubschnecken-Plastifizier- und -Spritzeinheit
- 12: Zwischenplatte
- 13: erster Verbindungskanal
- 14: zweiter Verbindungskanal

## Patentansprüche

1. Verfahren zum Spritzgießen von Formteilen, die aus einer Mischung aus mindestens einem Kunststoffmaterial und mindestens einem Zusatz in Form von faser- oder pulverförmigen Füll- oder Verstärkungsstoffen, insbesondere Glasfasern, Kohlenstoff-Fasern, Holzfasern, Kreide, mineralischen Füllstoffen und/oder Talkum, bestehen, das die Schritte aufweist:
a) Plastifizieren einer Mischung des Kunststoffmaterial mit den sich darin befindlichen Füll- oder Verstärkungsstoffen in einer Schubschnecken-Plastifizier- und -Spritzeinheit (1) durch Rotieren einer Plastifizier- und Einspritzschnecke (2), die in einem Schnekkenzylinder (3) rotatorisch und axial beweglich angeordnet ist;
b) Austreiben der plastifizierten Mischung aus Kunststoffmaterial und Füll- oder Verstärkungsstoffen durch axiales Verschieben der Plastifizier- und -Einspritzschnecke (2) aus der Schubschnecken-Plastifizier- und -Spritzeinheit (1) in ein Mischelement (4);
c) Homogenisieren der Mischung aus Kunststoffmaterial und Fülloder Verstärkungsstoffen in dem Mischelement (4) durch einen Mischer (5), der im Mischelement (4) beweglich und von einem mechanischen Antrieb (6) antreibbar angeordnet ist;
d) Austreiben der homogenisierten Mischung aus Kunststoffmaterial und Füll- oder Verstärkungsstoffen vom Mischelement (4) in ein Spritzgießwerkzeug (7).

2. Verfahren nach Anspruch 1, **dadurch gekennzeichnet, daß** die Fülloder Verstärkungsstoffe dem bereits zumindest teilaufgeschmolzenen Kunststoffmaterial in den Schneckenzylinder zugefiihrt werden.

3. Verfahren nach Anspruch 1 oder 2, **dadurch gekennzeichnet, daß** Schritt d) von Anspruch 1 aus den Teilschritten besteht:
d1) Austreiben der homogenisierten Mischung aus Kunststoffmaterial und Füll- oder Verstärkungsstoffen vom Mischelement (4) in einen Schmelzespeicher (8);
d2) Kumulieren einer für die Herstellung eines Formteils ausreichenden Menge Mischung in dem Schmelzespeicher (8);
d3) Austreiben der angesammelten Mischung aus dem Schmelzespeicher (8) in das Spritzgießwerkzeug (7).

4. Verfahren nach einem der Ansprüche 1 bis 3, **dadurch gekennzeichnet, daß** der vom Mischelement (4) oder Schmelzespeicher (8) ausgetriebenen Mischung aus Kunststoffmaterial und Füll- oder Verstärkungsstoffen vor der Einspritzung ins Spritzgießwerkzeug eine weitere Kunststoffkomponente zugemischt wird.

5. Verfahren nach einem der Ansprüche 1 bis 4, **dadurch gekennzeichnet, daß** das Mischelement von mindestens zwei parallel angeordneten Schubschnecken-Plastifizier- und -Spritzeinheiten (1, 9) befüllt wird, wobei mindestens eine Schubschnecken-Plastifizier- und Spritzeinheit (1, 9) eine Mischung aus Kunststoffmaterial und Fülloder Verstärkungsstoffen aufbereitet.

6. Verfahren nach einem der Ansprüche 1 bis 5, **dadurch gekennzeichnet, daß** der Mischer (5) eine Rotationsbewegung ausführt, die nach einem in der Steuerung der Spritzgießmaschine hinterlegten Drehzahlprofil mit über der Zeit ungleichförmigem Verlauf erfolgt.

7. Verfahren nach Anspruch 6, **dadurch gekennzeichnet, daß** während der Plastifizierung der Mischung gemäß Schritt a) von Anspruch 1 keine Rotation des Mischers (5) erfolgt.

8. Vorrichtung zum Spritzgießen von Formteilen, die aus einer Mischung aus mindestens einem Kunststoffmaterial und mindestens einem Zusatz in Form von faser- oder pulverförmigen Füll- oder Verstärkungsstoffen, insbesondere Glasfasern, Kohlenstoff-Fasern, Holzfasern, Kreide, mineralischen Füllstoffen und/oder Talkum, bestehen, insbesondere zur Durchführung des Verfahrens nach Anspruch 1 bis 7, die aufweist:
- mindestens eine Schubschnecken-Plastifizier- und -Spritzeinheit (1) zum Plastifizieren einer Mischung des Kunststoffmaterial mit den sich darin befindlichen Füll- oder Verstärkungsstoffen mit einer Plastifizier- und Einspritzschnecke (2), die in einem Schneckenzylinder (3) rotatorisch und axial beweglich angeordnet ist und
- ein Spritzgießwerkzeug (7), in das die plastifizierte Mischung aus Kunststoffmaterial und Füll- oder Verstärkungsstoffen eingespritzt wird,
**dadurch gekennzeichnet, daß**
zwischen der Schubschnecken-Plastifizier- und -Spritzeinheit (1) und dem Spritzgießwerkzeug (7) ein Mischelement (4) angeordnet ist, das einen Mischer (5), der von einem mechanischen Antrieb (6) angetrieben wird, zur Homogenisierung der Mischung des Kunststoffmaterial mit den sich darin befindlichen Füll- oder Verstärkungsstoffen aufweist.

9. Vorrichtung nach Anspruch 8, **dadurch gekennzeichnet, daß** zur Zuführung von Füll- oder Verstärkungsstoffen in das bereits zumindest teilaufgeschmolzene Kunststoffmaterial eine Zuführeinrichtung für Zusatzstoff (10) vorgesehen ist, die die Füll- oder Verstärkungsstoffe in den Bereich des Schneckenzylinders (3) zuführt.

10. Vorrichtung nach Anspruch 8 oder 9, **dadurch gekennzeichnet, daß** zwischen dem Mischelement (4) und dem Spritzgießwerkzeug (7) ein Schmelzespeicher (8) angeordnet ist.

11. Vorrichtung nach Anspruch 10, **dadurch gekennzeichnet, daß** der Schmelzespeicher (8) Mittel zum Einspritzen von kumuliertem Kunststoffmaterial in das Spritzgießwerkzeug (7) aufweist.

12. Vorrichtung nach einem der Ansprüche 8 bis 11, **dadurch gekennzeichnet, daß** mindestens eine weitere Schubschnecken-Plastifizierund -Spritzeinheit (9) zur Zumischung einer weiteren Kunststoffkomponente zu der Mischung aus Kunststoffmaterial und Füll- oder Verstärkungsstoffen vor der Einspritzung ins Spritzgießwerkzeug vorgesehen ist.

13. Vorrichtung nach einem der Ansprüche 8 bis 12, **dadurch gekennzeichnet, daß** mindestens zwei parallel angeordnete Schubschnekken-Plastifizier- und -Spritzeinheiten (1, 9) vorgesehen sind.

14. Vorrichtung nach einem der Ansprüche 8 bis 13, **dadurch gekennzeichnet, daß** die Plastifizier- und -Einspritzschnecke (2) als 3- oder Mehrzonenschnecke ausgebildet ist.

15. Vorrichtung nach einem der Ansprüche 8 bis 13, **dadurch gekennzeichnet, daß** die Plastifizier- und -Einspritzschnecke (2) als Mischteil-, Barriere- oder Barrieremischteilschnecke ausgebildet ist.

16. Vorrichtung nach einem der Ansprüche 8 bis 13, **dadurch gekennzeichnet, daß** die Plastifizier- und -Einspritzschnecke (2) als Entgasungsschnecke ausgebildet ist.

17. Vorrichtung nach einem der Ansprüche 8 bis 16, **dadurch gekennzeichnet, daß** die Zuführeinrichtung (10) als Förderschnecke oder Dosiervorrichtung ausgebildet ist.

18. Vorrichtung nach Anspruch 16 oder 17, **dadurch gekennzeichnet, daß** die Zuführeinrichtung (10) mit ihrem Ausstoßbereich im Entgasungsbereich der Plastifizier- und -Einspritzschnecke (2) angeordnet ist.

19. Vorrichtung nach Anspruch 10 oder 11, **dadurch gekennzeichnet, daß** zwischen Mischelement (4) und Schmelzespeicher (8) ein Rückschlagventil, insbesondere ein Kugelrückschlagventil, oder ein Verschluß, insbesondere ein Querbolzenverschluß, angeordnet ist.

## Claims

1. Process for injection-moulding of mouldings which consist of a mixture of at least one plastic material and at least one additive in the form of fibrous or pulverulent fillers or reinforcing materials, in particular glass fibres, carbon fibres, wood fibres, chalk, mineral fillers and/or talc, which has the steps:
a) plastifying a mixture of plastic material with the fillers or reinforcing materials situated therein in a reciprocating-screw plastifying and injection unit (1) by rotating a plastifying and injection screw (2), which is arranged in a screw cylinder (3) to be movable in rotary and axial manner;
b) expelling the plastified mixture of plastic material and fillers or reinforcing materials by axial displacement of the plastifying and injection screw (2) from the reciprocating-screw plastifying and injection unit (1) into a mixing element (4);
c) homogenising the mixture of plastic material and fillers or reinforcing materials in the mixing element (4) by a mixer (5), which is arranged in the mixing element (4) to be movable and drivable by a mechanical drive (6);
d) expelling the homogenised mixture of plastic material and fillers or reinforcing materials from the mixing element (4) into an injection-moulding die (7).

2. Process according to claim 1, **characterised in that** the fillers or reinforcing materials are supplied to the plastic material in the screw cylinder already at least partly melted.

3. Process according to claim 1 or 2, **characterised in that** step d) of claim 1 comprises the part steps:
d1) expelling the homogenised mixture of plastic material and fillers or reinforcing materials from the mixing element (4) into a melt store (8);
d2) accumulating an adequate quantity of mixture in the melt store (8) for producing a moulding;
d3) expelling the collected mixture from the melt store (8) into the injection-moulding die (7).

4. Process according to one of claims I to 3, **characterised in that** a further plastic component is admixed to the mixture of plastic material and fillers or reinforcing materials expelled from the mixing element (4) or melt store (8) before injection into the injection-moulding die.

5. Process according to one of claims 1 to 4, **characterised in that** the mixing element is filled by at least two reciprocating-screw plastifying and injection units (1, 9) arranged in parallel, wherein at least one reciprocating-screw plastifying and injection unit (1, 9) prepares a mixture of plastic material and fillers or reinforcing materials.

6. Process according to one of claims 1 to 5, **characterised in** the mixer (5) executes a rotary movement, which takes place according to a speed profile filed in the control of the injection-moulding machine with non-uniform course over time.

7. Process according to claim 6, **characterised in that** rotation of the mixer (5) does not take place during plastification of the mixture according to step a) of claim 1.

8. Device for injection-moulding of mouldings which consist of a mixture of at least one plastic material and at least one additive in the form of fibrous or pulverulent fillers or reinforcing materials, in particular glass fibres, carbon fibres, wood fibres, chalk, mineral fillers and/or talc, in particular for carrying out the process according to claim 1 to 7, which has:
- at least one reciprocating-screw plastifying and injection unit (1) for plastifying a mixture of plastic material with the fillers or reinforcing materials situated therein using a plastifying and injection screw (2), which is arranged in a screw cylinder (3) to be movable in rotary and axial manner and
- an injection-moulding die (7), into which the plastified mixture of plastic material and fillers or reinforcing materials is injected,
**characterised in that**
a mixing element (4), which has a mixer (5) which is driven by a mechanical drive (6), is arranged between the reciprocating-screw plastifying and injection unit (1) and the injection-moulding die (7) for homogenising the mixture of plastic material with the fillers or reinforcing materials situated therein.

9. Device according to claim 8, **characterised in that** to supply fillers or reinforcing materials into the plastic material already at least partly melted, a supply device for additive (10) is provided which supplies the fillers or reinforcing materials to the region of the screw cylinder (3).

10. Device according to claim 8 or 9, **characterised in that** a melt store (8) is arranged between the mixing element (4) and the injection-moulding die (7).

11. Device according to claim 10, **characterised in that** the melt store (8) has means for injecting accumulated plastic material into the injection-moulding die (7).

12. Device according to one of claims 8 to 11, **characterised in that** at least one further reciprocating-screw plastifying and injection unit (9) is provided for admixing a further plastic component to the mixture of plastic material and fillers or reinforcing materials before injection into the injection-moulding die.

13. Device according to one of claims 8 to 12, **characterised in that** at least two reciprocating-screw plastifying and injection units (1, 9) arranged in parallel are provided.

14. Device according to one of claims 8 to 13, **characterised in that** the plastifying and injection screw (2) is designed as a 3-zone or multi-zone screw.

15. Device according to one of claims 8 to 13, **characterised in that** the plastifying and injection screw (2) is designed as a mixing part, barrier or barrier-mixing part screw.

16. Device according to one of claims 8 to 13, **characterised in that** the plastifying and injection screw (2) is designed as a degassing screw.

17. Device according to one of claims 8 to 16, **characterised in that** the supply device (10) is designed as a conveyor screw or metering device.

18. Device according to claim 16 or 17, **characterised in that** the supply device (10) is arranged with its ejection region in the degassing region of the plastifying and injection screw (2).

19. Device according to claim 10 or 11, **characterised in that** a non-return valve, in particular a ball non-return valve, or a closure, in particular a cross-bolt closure, is arranged between mixing element (4) and melt store (8).

## Revendications

1. Procédé de moulage par injection de pièces constituées d'un mélange d'au moins une matière plastique et au moins un additif sous forme de matières de charge ou de renfort fibreuses ou pulvérulentes, en particulier de fibres de verre, de fibres de carbone, de fibres de bois, de craie, de matières de charge minérales et/ou de talc, qui comprend les étapes suivantes :
a) plastification d'un mélange de la matière plastique avec les matières de charge ou de renfort qui s'y trouvent dans un dispositif de plastification et d'injection à vis mobile (1) par rotation d'une vis de plastification et d'injection (2) qui est montée tournante et mobile axialement dans un cylindre à vis (3),
b) expulsion du mélange plastifié de matière plastique et de matières de charge ou de renfort du dispositif de plastification et d'injection à vis mobile (1) dans un élément mélangeur (4) par déplacement axial de la vis de plastification et d'injection (2),
c) homogénéisation du mélange de matière plastique et de matières de charge ou de renfort dans l'élément mélangeur (4) par un mélangeur (5) qui est monté mobile dans l'élément mélangeur (4) et entraînable par un dispositif d'entraînement mécanique (6),
d) expulsion du mélange homogénéisé de matière plastique et de matières de charge ou de renfort de l'élément mélangeur (4) dans un moule d'injection (7).

2. Procédé selon la revendication 1, **caractérisé par le fait que** les matières de charge ou de renfort sont amenées dans le cylindre à vis à la matière plastique déjà au moins partiellement fondue.

3. Procédé selon l'une des revendications 1 et 2, **caractérisé par le fait que** l'étape d) de la revendication 1 se compose des étapes partielles suivantes :
d1) expulsion du mélange homogénéisé de matière de plastique et de matières de charge ou de renfort de l'élément mélangeur (4) dans un accumulateur de matière fondue (8),
d2) accumulation dans l'accumulateur de matière fondue (8) d'une quantité de mélange suffisante pour la production d'une pièce moulée,
d1) expulsion du mélange accumulé de l'accumulateur de matière fondue (8) dans le moule d'injection (7).

4. Procédé selon l'une des revendications 1 à 3, **caractérisé par le fait qu'**au mélange de matière plastique et de matières de charge ou de renfort expulsé de l'élément mélangeur (4) ou de l'accumulateur de matière fondue (8) est ajouté, avant l'injection dans le moule d'injection, un autre constituant de plastique.

5. Procédé selon l'une des revendications 1 à 4, **caractérisé par le fait que** l'élément mélangeur est rempli par au moins deux dispositifs de plastification et d'injection à vis mobile (1, 9) placés en parallèle, et au moins un dispositif de plastification et d'injection à vis mobile (1, 9) prépare un mélange de matière plastique et de matières de charge ou de renfort.

6. Procédé selon l'une des revendications 1 à 5, **caractérisé par le fait que** le mélangeur (5) exécute un mouvement de rotation qui s'effectue selon un profil de vitesse de rotation consigné dans la commande de la machine de moulage par injection, avec allure non uniforme dans le temps.

7. Procédé selon la revendication 6, **caractérisé par le fait que** pendant la plastification du mélange selon l'étape a) de la revendication 1 n'a pas lieu de rotation du mélangeur (5).

8. Dispositif de moulage par injection de pièces constituées d'un mélange d'au moins une matière plastique et au moins un additif sous forme de matières de charge ou de renfort fibreuses ou pulvérulentes, en particulier de fibres de verre, de fibres de carbone, de fibres de bois, de craie, de matières de charge minérales et/ou de talc, en particulier pour la mise en oeuvre du procédé selon l'une des revendications 1 à 7, qui présente :
- au moins un dispositif de plastification et d'injection à vis mobile (1) pour la plastification d'un mélange de la matière plastique avec les matières de charge ou de renfort qui s'y trouvent avec une vis de plastification et d'injection (2) qui est montée tournante et mobile axialement dans un cylindre à vis (3) et
- un moule d'injection (7) dans lequel est injecté le mélange plastifié de matière plastique et de matières de charge ou de renfort,
**caractérisé par le fait**
**qu'**entre le dispositif de plastification et d'injection à vis mobile (1) et le moule d'injection (7) est placé un élément mélangeur (4) qui présente un mélangeur (5) entraîné par un dispositif d'entraînement mécanique (6) pour l'homogénéisation du mélange de la matière plastique avec les matières de charge ou de renfort qui s'y trouvent.

9. Dispositif selon la revendication 8, **caractérisé par le fait que** pour l'amenée de matières de charge ou de renfort dans la matière plastique déjà au moins partiellement fondue est prévu un dispositif d'amenée d'additif (10) qui amène les matières de charge ou de renfort dans la zone du cylindre à vis (3).

10. Dispositif selon l'une des revendications 8 et 9, **caractérisé par le fait qu'**entre l'élément mélangeur (4) et le moule d'injection (7) est placé un accumulateur de matière fondue (8).

11. Dispositif selon la revendication 10, **caractérisé par le fait que** l'accumulateur de matière fondue (8) présente des moyens d'injection dans le moule d'injection (7) de matière plastique accumulée.

12. Dispositif selon l'une des revendications 8 à 11, **caractérisé par le fait qu'**il est prévu au moins un autre dispositif de plastification et d'injection à vis mobile (9) pour l'addition d'un autre constituant de plastique au mélange de matière plastique et de matières de charge ou de renfort avant l'injection dans le moule d'injection.

13. Dispositif selon l'une des revendications 8 à 12, **caractérisé par le fait qu'**il est prévu au moins deux dispositifs de plastification et d'injection à vis mobile (1, 9) placés en parallèle.

14. Dispositif selon l'une des revendications 8 à 13, **caractérisé par le fait que** la vis de plastification et d'injection (2) est une vis à trois ou plus de trois zones.

15. Dispositif selon l'une des revendications 8 à 13, **caractérisé par le fait que** la vis de plastification et d'injection (2) est une vis à partie mélangeuse, à barrière ou à barrière et partie mélangeuse.

16. Dispositif selon l'une des revendications 8 à 13, **caractérisé par le fait que** la vis de plastification et d'injection (2) est une vis à dégazage.

17. Dispositif selon l'une des revendications 8 à 16, **caractérisé par le fait que** le dispositif d'amenée (10) est une vis transporteuse ou un dispositif de dosage.

18. Dispositif selon l'une des revendications 16 et 17, **caractérisé par le fait que** la zone d'expulsion du dispositif d'amenée (10) est placée dans la zone de dégazage de la vis de plastification et d'injection (2).

19. Dispositif selon l'une des revendications 10 et 11, **caractérisé par le fait qu'**entre l'élément mélangeur (4) et l'accumulateur de matière fondue (8) est placé un clapet de non-retour, en particulier un clapet-boule, ou une fermeture, en particulier une fermeture à tige transversale.
